Europäisches Patentamt

European Patent Office

Office européen des brevets

(19)

(11) Numéro de publication : **0 084 509**
**B1**

(12) # FASCICULE DE BREVET EUROPÉEN

(45) Date de publication du fascicule du brevet :
28.05.86

(21) Numéro de dépôt : **83420004.0**

(22) Date de dépôt : **12.01.83**

(51) Int. Cl.⁴ : **A 21 C   3/02**

(54) Mécanisme d'entrainement réversible à vitesse variable des convoyeurs d'un laminoir à pâte.

(30) Priorité : **13.01.82 FR 8200551**

(43) Date de publication de la demande :
**27.07.83 Bulletin 83/30**

(45) Mention de la délivrance du brevet :
**28.05.86 Bulletin 86/22**

(84) Etats contractants désignés :
**AT BE CH DE GB IT LI LU NL SE**

(56) Documents cités :
**CH-A-   325 442**

(73) Titulaire : **COMPTOIR DE L'INDUSTRIE ALIMEN-
TAIRE Société à responsabilité limitée
20 Place du Marché
F-42700 Firminy Loire (FR)**

(72) Inventeur : **Sahuc, Daniel
104 C rue des Alliés
F-42100 St-Etienne (FR)**

(74) Mandataire : **Perrier, Jean-Pierre et al
Cabinet GERMAIN & MAUREAU 12 rue de la République
F-42000 St-Etienne (FR)**

## Description

La présente invention a pour objet un mécanisme d'entraînement motorisé à vitesse variable et réversible, c'est-à-dire avec inversion du sens de déplacement, des convoyeurs d'un laminoir à pâtes, du genre des laminoirs à pâte comprenant deux cylindres de laminage superposés d'écartement réglable, un premier convoyeur à tapis sans fin situé d'un côté des cylindres de laminage, et un second convoyeur à tapis sans fin situé du côté opposé, et comprenant aussi ledit mécanisme d'entraînement motorisé réversible relié aux deux cylindres de laminage ainsi qu'aux rouleaux moteurs de deux convoyeurs, ce mécanisme d'entraînement comportant un moto-réducteur réversible, qui entraîne les cylindres de laminage et en outre, pour obtenir une diminution de la vitesse de celui des convoyeurs utilisé comme convoyeur d'amenée de la pâte aux cylindres de laminage, un double variateur de vitesse avec un arbre d'entrée lui aussi entraîné à partir du moto-réducteur, avec un premier arbre de sortie lié au rouleau moteur du premier convoyeur, et avec un second arbre de sortie lié au rouleau moteur du second convoyeur, des moyens étant prévus pour agir sur les deux variateurs de vitesse.

Un tel mécanisme d'entraînement est connu par le document CH-A-325 442, qui prévoit deux variateurs de vitesse du type à courroie passant sur une poulie motrice et sur une poulie réceptrice dont au moins l'une possède des flasques d'écartement variable, les poulies motrices des deux variateurs à courroie étant entraînées à la même vitesse par l'arbre d'entrée entraîné lui-même à partir du moto-réducteur, la poulie réceptrice de l'un des variateurs étant montée sur le premier arbre de sortie qui est lié au rouleau moteur du premier convoyeur, et la poulie réceptrice de l'autre variateur étant montée sur le second arbre de sortie qui est lié au rouleau moteur du second convoyeur.

L'invention concerne ainsi l'entraînement des convoyeurs utilisés l'un pour amener la pâte aux cylindres de laminage, et l'autre pour l'évacuer après son passage entre les cylindres, dans un laminoir de pâtisserie. Le laminoir étant réversible, la difficulté de conception du mécanisme d'entraînement provient du fait que chaque convoyeur sert alternativement à amener et à évacuer la pâte. Autrement dit, chaque convoyeur peut occuper par rapport aux cylindres de laminage soit une position « amont », soit une position « aval », et il doit être entraîné de façon différente, non seulement en sens de déplacement mais aussi en vitesse, selon qu'il occupe la position amont ou aval.

Plus précisément, lors d'une opération de laminage consistant par exemple à amener l'épaisseur de la pâte de 20 mm à 15 mm, le convoyeur amont qui amène la pâte entre les rouleaux de laminage a un comportement différent du convoyeur aval, qui évacue la pâte mise à l'épaisseur voulue. En effet, si on écrit l'égalité des débits à l'entrée et à la sortie des cylindres de laminage, on s'aperçoit que la vitesse du convoyeur amont est liée à la diminution d'épaisseur que l'on veut faire subir à la pâte, le convoyeur aval ayant lui une vitesse sensiblement égale à la vitesse circonférentielle des cylindres de laminage. Il y a donc lieu de prévoir un dispositif permettant d'ajuster la vitesse du convoyeur amont en fonction de la diminution d'épaisseur de la pâte. De plus, le fait d'écrire que le débit à l'entrée est le même qu'à la sortie, n'est pas rigoureusement exact. En effet, la pâte subit une certaine compression, et il faut tenir compte aussi d'une variation de dimension dans le sens de la largeur du bloc de pâte. Pour toutes ces raisons, il est préférable que l'opérateur utilisant la machine puisse intervenir à tout moment sur la vitesse du convoyeur amont.

Il existe actuellement plusieurs dispositifs permettant l'entraînement des deux convoyeurs à des vitesses distinctes et de manière à diminuer la vitesse du convoyeur amont, par exemple des dispositifs avec un basculeur qui réalise à l'aide de couples de pignons une démultiplication de la vitesse pour l'entraînement du convoyeur amont. Ces dispositifs présentent l'inconvénient majeur d'avoir des rapports de vitesses figés, alors que comme expliqué ci-dessus, le laminage de la pâte nécessite un ajustement permanent de la vitesse du convoyeur amont suivant le travail effectué.

Dans le cas du document CH-A-325 442 cité plus haut, utilisant des transmissions à courroies s'inspirant d'un principe connu de variateurs de vitesse, il n'est fourni aucune indication sur la commande d'ensemble du mécanisme.

Le but de l'invention est de fournir une commande centralisée, unique et commune, pour la variation de vitesse de l'un ou l'autre des convoyeurs, permettant non seulement de faire varier en continu le rapport de transmission pour l'entraînement à vitesse réduite du rouleau moteur du convoyeur amont, tout en maintenant constante la vitesse d'entraînement du rouleau moteur du convoyeur aval, mais encore d'inverser automatiquement les modes d'entraînement des deux convoyeurs lorsque l'on inverse le sens d'entraînement des cylindres de laminage.

A cet effet, dans une forme de réalisation de l'invention utilisant deux variateurs de vitesse du type à courroie selon le document CH-A-325 442, il est prévu, pour la commande de ce double variateur de vitesses à courroies, un organe coulissant unique et commun, déplaçable manuellement et comportant une première rampe inclinée coopérant avec un poussoir permettant de modifier l'écartement des flasques de la poulie réceptrice du premier variateur à courroie, et une seconde rampe inclinée coopérant avec un poussoir permettant de modifier l'écartement des flasques de la poulie réceptrice du second variateur à courroie, la position relative des deux rampes étant telle que, lorsque l'une des rampes coopère avec le poussoir correspondant de manière à rapprocher les flasques de la poulie réceptrice de l'un des variateurs à courroie, le poussoir associé à la poulie réceptrice de l'autre variateur à courroie est libéré et permet aux flasques de cette dernière poulie de se placer dans une position relative prédéterminée, maintenant constante la vitesse du convoyeur entraîné par l'intermédiaire de cet autre variateur, les extrémités de l'organe de commande coulissant étant prévues pour coopérer avec deux contacts électriques reliés à un contacteur inverseur contrôlant l'alimentation électrique et le sens de marche du moto-réducteur.

Ainsi, quel que soit le sens d'entraînement des cylindres de laminage et des deux convoyeurs, l'opérateur dispose d'une seule commande lui permettant non seulement de provoquer mais encore de régler en continu la réduction de vitesse du convoyeur amont, pour l'amenée de la pâte aux cylindres, tandis que la vitesse du convoyeur aval se maintient automatiquement à une valeur fixe pré-réglée pour l'évacuation de la pâte. En effet, le même organe de commande coulissant provoque, selon qu'il est actionné dans un sens ou dans l'autre, la réduction de vitesse progressive de l'une ou l'autre des poulies réceptrices montées chacune sur l'arbre de sortie relié à l'un des convoyeurs ; la poulie sur laquelle l'organe de commande n'exerce pas d'action est alors entraînée à une vitesse ajustée de manière à déplacer le convoyeur aval à une vitesse correspondant à celle des cylindres de laminage. En outre, dans son déplacement, l'organe de commande coulissant, avant d'actionner par l'une de ses rampes inclinées l'un des poussoirs agissant sur les variateurs à courroie, vient agir sur l'un des micro-contacts de manière à mettre en marche le moto-réducteur dans le sens correspondant à la différenciation des convoyeurs amont et aval résultant de l'action sélective sur l'un ou l'autre des deux poussoirs précités.

Selon une autre caractéristique, un dispositif réducteur de vitesse, notamment à engrenages, est encore intercalé entre l'arbre de sortie de chaque variateur à courroie et l'axe du rouleau moteur du convoyeur correspondant, ce réducteur de vitesse permettant d'utiliser le variateur à courroie dans une plage de vitesse convenable, et de disposer d'un couple important pour l'entraînement de chaque convoyeur.

Cette première forme de réalisation, dans laquelle chaque convoyeur a son propre variateur à courroie qui est actionné uniquement lorsque ce convoyeur est en position amont, est notamment destinée à l'entraînement des convoyeurs de grandes dimensions. L'arbre d'entrée du double variateur de vitesse constitue ici avantageusement l'arbre d'entrée de l'un des variateurs à courroie et est entraîné à partir de l'arbre de sortie du moto-réducteur, par l'intermédiaire d'un engrenage à vis sans fin, similaire à un premier engrenage à vis sans fin par l'intermédiaire duquel le même arbre entraîne les cylindres de laminage. L'arbre d'entrée de l'autre variateur à courroie est entraîné à partir de l'arbre d'entrée du premier variateur à courroie, et en synchronisme avec celui-ci, par exemple en utilisant une courroie de transmission crantée.

Suivant une deuxième forme de réalisation de l'invention, le double variateur de vitesse comprend un plateau tournant, porté par l'arbre d'entrée entraîné à partir du moto-réducteur, un premier galet apte à être entraîné par effet de friction par le plateau et porté par un arbre, de direction radiale par rapport au plateau, qui est relié au rouleau moteur du premier convoyeur, et un second galet apte à être entraîné lui aussi par friction par le même plateau et porté par un arbre, de direction radiale par rapport au plateau, qui est relié au rouleau moteur du second convoyeur, chaque galet étant déplaçable axialement sur l'arbre correspondant réalisé creux et présentant des lumières traversées par une goupille portée par le moyeu du galet, un ressort de rappel logé dans l'arbre reliant la goupille à un point d'attache fixe sur l'arbre, et il est prévu, pour la commande de ce double variateur de vitesse, un organe coulissant unique et commun, déplaçable manuellement et portant deux poussoirs, de préférence équipés de roulements, dont chacun est apte à s'appliquer sur l'un des galets pour le déplacer en direction du centre du plateau, les extrémités de l'organe de commande coulissant étant prévues pour coopérer avec deux contacts électriques reliés à un contacteur inverseur contrôlant l'alimentation électrique et le sens de marche du moto-réducteur.

Cette deuxième forme de réalisation dans laquelle chaque convoyeur est entraîné par un galet de friction déplaçable radialement par rapport au plateau tournant qui l'entraîne, convient plus particulièrement pour la motorisation des convoyeurs de petites et moyennes dimensions. Celui des deux galets qui entraîne le convoyeur amont est rapproché du centre du plateau de manière à décrire une circonférence de plus petit diamètre, donc à être ralenti ce qui diminuera la vitesse du convoyeur amont. L'autre galet n'est pas déplacé et roule sur une circonférence de diamètre prédéterminé, pour entraîner le convoyeur aval à une vitesse constante ajustée à celle des cylindres de laminage. L'organe de commande commun coulissant, portant ici deux poussoirs, permet d'obtenir un déplacement progressif de l'un des galets vers le centre du plateau, pour régler en continu la diminution de vitesse de l'arbre de ce galet, relié au convoyeur utilisé comme convoyeur amont. Le galet associé au convoyeur aval, n'étant pas sollicité par le poussoir correspondant, est rappelé par le ressort associé dans sa position la plus éloignée du centre du plateau.

Le plateau tournant peut être porté par une extrémité de l'arbre de l'un des cylindres de laminage, par exemple par l'arbre du cylindre de laminage inférieur. Compte tenu de l'orientation qui en résulte pour les arbres portant respectivement les deux galets, chacun de ces arbres est de préférence relié à l'axe du rouleau moteur du convoyeur correspondant, auquel il transmet son mouvement de rotation, par l'intermédiaire d'un couple de pignons coniques.

De toute façon, l'invention sera mieux comprise à l'aide de la description qui suit, en référence au dessin schématique annexé représentant, à titre d'exemples non limitatifs, deux formes d'exécution de ce mécanisme d'entraînement réversible à vitesse variable des convoyeurs d'un laminoir à pâte :

Figure 1 est un schéma de principe d'un laminoir à pâte, pouvant être équipé du mécanisme d'entraînement objet de l'invention ;

Figure 2 est une vue d'ensemble en perspective éclatée de ce mécanisme d'entraînement, dans une première forme d'exécution ;

Figure 3 est une vue de côté du mécanisme de figure 2, en coupe suivant 3-3 de figure 4 ;

Figure 4 en est une vue en coupe verticale, suivant 4-4 de figure 3 ;

Figure 5 en est une vue en coupe horizontale, suivant 5-5 de figure 3 ;

Figure 6 en est une autre vue en coupe horizontale, suivant 6-6 de figure 3 ;

Figure 7 est une vue d'ensemble, en perspective éclatée, d'une seconde forme d'exécution du mécanisme d'entraînement objet de l'invention ;

Figure 8 est une vue de côté du mécanisme de figure 7, en coupe suivant 8-8 de figure 10 ;

Figure 9 en est une vue en coupe verticale ;

Figure 10 en est une vue en coupe horizontale, suivant 10-10 de figure 8.

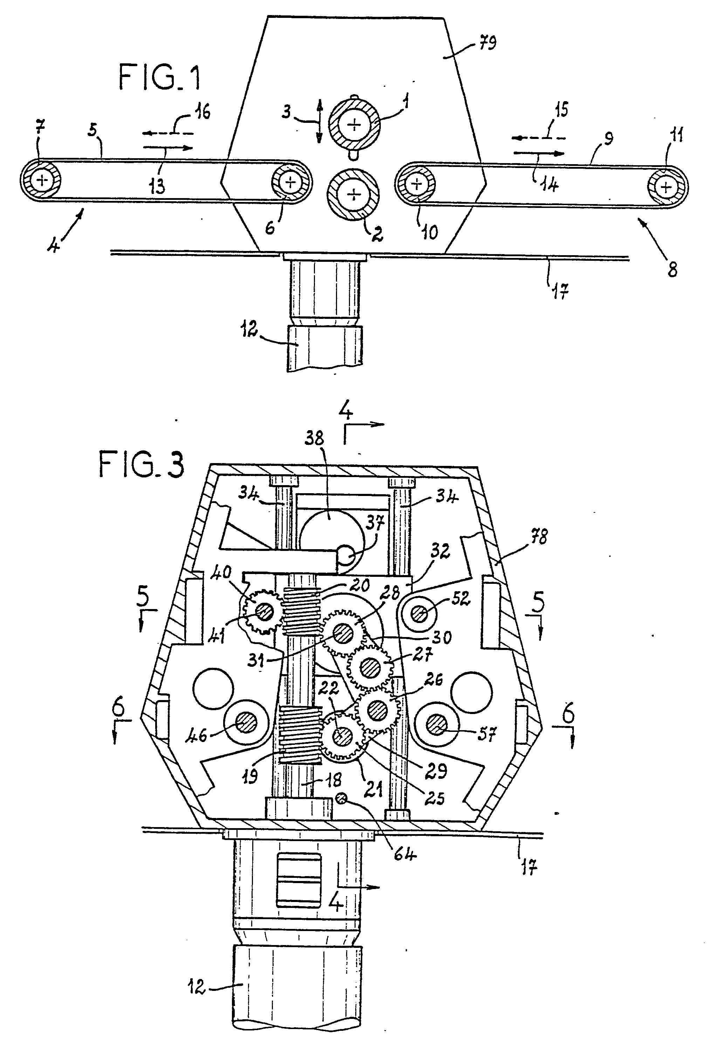

Sur la figure 1, très schématique, est rappelé le principe d'un laminoir de pâtisserie. Celui-ci comprend, dans sa partie centrale, deux cylindres de laminage superposés (1, 2), ayant leurs axes horizontaux. Comme l'indique la flèche (3), le niveau du cylindre de laminage supérieur (1) est réglable, de manière à faire varier la hauteur de l'intervalle qui sépare les deux cylindres (1, 2). Sur un côté de ces cylindres (1, 2) est prévu un premier convoyeur horizontal (4), constitué par un tapis sans fin (5) tendu entre un rouleau moteur (6) et un rouleau de renvoi (7). Du côté opposé est prévu un second convoyeur horizontal (8), constitué lui aussi par un tapis sans fin (9) tendu entre un rouleau moteur (10) et un rouleau de renvoi (11). Les deux cylindres de laminage (1, 2), le rouleau moteur (6) du premier convoyeur (4) et le rouleau moteur (10) du second convoyeur (8) sont situés dans une même zone de la machine et sont entraînés en rotation à partir d'un même moto-réducteur réversible (12).

Lors d'une opération de laminage de la pâte, le premier convoyeur (4) entraîné dans le sens de la flèche (13) sert par exemple de convoyeur d'amenée, apportant la pâte entre les cylindres de laminage (1, 2). L'autre convoyeur (8), entraîné dans le même sens que le premier suivant la flèche (14), sert alors à l'évacuation de la pâte mise à l'épaisseur voulue. Dans ces conditions d'utilisation du laminoir, le second convoyeur (8) doit être entraîné à une vitesse sensiblement égale à la vitesse circonférencielle des cylindres de laminage (1, 2). La vitesse du premier convoyeur (4) doit être diminuée par rapport à celle des cylindres de laminage (1, 2) et du second convoyeur (8), la réduction de vitesse étant fonction de la diminution d'épaisseur de la pâte lors de son passage entre les cylindres (1, 2).

Ensuite, si la pâte parvenue sur le second convoyeur (8) doit subir une nouvelle diminution d'épaisseur, ce second convoyeur (8) est entraîné dans le sens inverse indiqué par la flèche (15) pour servir à son tour de convoyeur d'amenée. Le premier convoyeur (4), dont le sens d'entraînement est aussi inversé comme indiqué par la flèche (16), devient alors le convoyeur d'évacuation. Dans ces conditions, c'est le premier convoyeur (4) qui doit être entraîné à la vitesse des cylindres de laminage (1, 2), tandis que la vitesse du second convoyeur (8) doit être réduite.

Le mécanisme d'entraînement, objet de l'invention, permet d'obtenir dans tous les cas la réduction de vitesse du convoyeur (4 ou 8) dit « amont », c'est-à-dire celui assurant l'amenée de la pâte aux cylindres de laminage (1, 2), ceci en correspondance avec la sélection du sens de rotation du moto-réducteur (12).

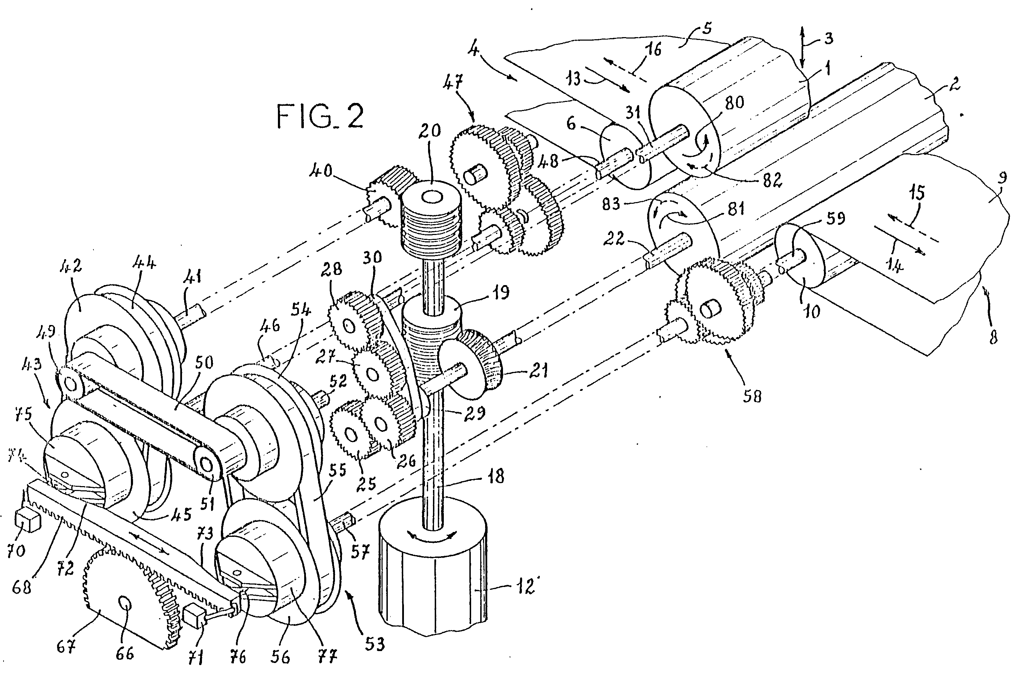

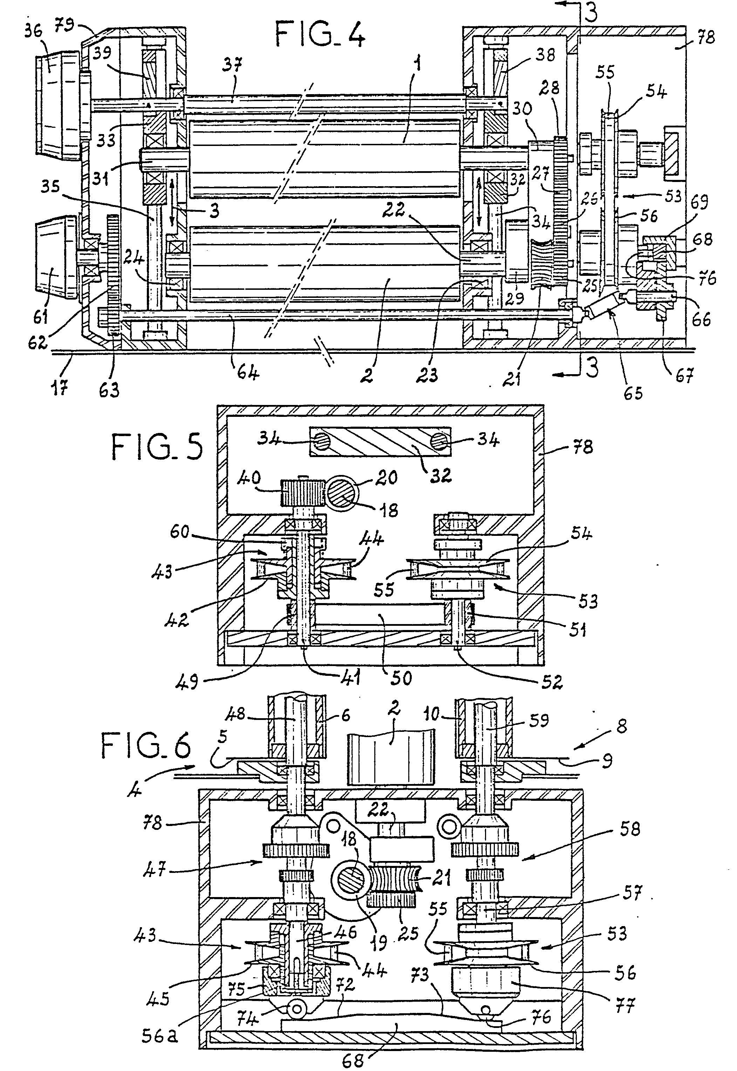

Une première forme d'exécution de ce mécanisme est représentée sur les figures 2 à 6. Le moto-réducteur (12) est ici situé au-dessous de la double table (17) supportant les deux convoyeurs (4, 8). L'arbre de sortie vertical (18) du moto-réducteur (12) porte deux vis sans fin (19, 20). La vis sans fin inférieure (19) engrène avec une roue creuse (21), calée sur l'arbre (22) du cylindre de laminage inférieur (2) qui tourne dans des paliers (23, 24) visibles sur la figure 4.

En avant de la roue creuse (21), l'arbre (22) porte un pignon (25) qui, par l'intermédiaire de trois autres pignons (26, 27, 28) montés sur deux bielles (29, 30) articulées entre elles, entraîne l'arbre (31) du cylindre de laminage supérieur (1), en inversant son sens de rotation par rapport à celui du cylindre inférieur (2), et en permettant le déplacement vertical du cylindre supérieur (1). A cet effet, les paliers (32, 33) de l'arbre (31) sont montés coulissants le long de guides verticaux respectifs (34, 35). Une manette de commande supérieure (36) est accouplée à un arbre horizontal (37) qui porte deux excentriques (38, 39) introduits dans des logements ménagés sur les paliers (32, 33) — voir figures 3 et 4.

La vis sans fin supérieure (20), porté par l'arbre (18), engrène avec un pignon hélicoïdal (40) fixé sur un arbre horizontal (41) sur lequel est montée la poulie motrice (42) d'un premier variateur à courroie désigné dans son ensemble par (43). La courroie (44) de ce premier variateur (43) passe encore sur une poulie réceptrice (45), située au-dessous de la poulie motrice (42) et montée sur un arbre de sortie (46). Un réducteur à engrenages (47), à deux étages, assure la liaison entre l'arbre de sortie (46) du premier variateur (43) et l'axe (48) portant le rouleau moteur (6) du premier convoyeur (4).

L'arbre d'entrée (41) du premier variateur à courroie (43) porte encore une roue dentée (49), entraînant une courroie sans fin crantée (50) qui passe sur une roue dentée réceptrice (51) monté sur l'arbre d'entrée (52) d'un second variateur à courroie (53). Comme le premier, ce second variateur (53) se compose d'une poulie motrice (54), d'une courroie (55) et d'une poulie réceptrice (56) montée sur un arbre de sortie (57). Un autre réducteur à engrenages (58), à deux étages, assure la liaison entre l'arbre de sortie (57) du second variateur (53) et l'axe (59) portant le rouleau moteur (10) du second convoyeur (8).

Dans chaque variateur à courroie (43, 53), c'est la poulie inférieure réceptrice (45, 56) qui possède une commande d'écartement de ses deux flasques, modifiant le diamètre d'enroulement de la courroie (44, 55) autour de cette poulie (45, 56). La poulie supérieure motrice (42, 54) de chaque variateur (43, 53) possède un flasque mobile soumis à la pression d'un ressort (60) — voir figure 5 — pour compenser automatiquement la variation du diamètre d'enroulement de la courroie (44, 55) sur la poulie inférieure (45, 56).

Une manette de commande inférieure (61) est accouplée, par l'intermédiaire d'un couple de pignons (62, 63) à un arbre de transmission horizontal (64) qui passe sous les cylindres (1, 2) et qui est lié en rotation, par l'intermédiaire d'un joint de cardan double (65), avec un autre arbre (66) portant un pignon ou un secteur denté (67) — voir surtout figure 4. Le pignon (67) est en prise avec une crémaillère (68) montée coulissante dans une glissière horizontale (69). Deux micro-contacts (70, 71), visibles sur la figure 2, sont prévus pour coopérer respectivement avec les extrémités de la crémaillère (68), ces micro-contacts (70, 71) étant reliés électriquement à un contacteur-inverseur non représenté qui contrôle l'alimentation électrique du moto-réducteur (12).

Dans la région de chacune de ses extrémités, la crémaillère (68) présente une partie droite, suivie d'une rampe inclinée (72, 73) — voir figures 2 et 6. Un premier galet (74), roulant sur la rampe (72) ou sur la partie droite voisine, est lié à un poussoir (75) agissant sur le flasque mobile de la poulie inférieure (45) du premier variateur à courroie (43). D'une façon symétrique, un second galet (76), roulant sur la rampe (73) ou sur la partie droite voisine, est lié à un poussoir (77) agissant sur le flasque mobile de la poulie inférieure (56) du second variateur à courroie (53).

La plupart des organes du mécanisme d'entraînement décrit jusqu'ici sont logés à l'intérieur d'un bâti (78) situé en avant des deux cylindres de laminage (1, 2). Seules les deux manettes de commande (36, 61) ainsi que les pignons (62, 63) associés à la manette (61), sont portés par un bâti secondaire (79) situé à l'opposé du bâti (78), par rapport aux cylindres de laminage (1, 2). Sur la figure 2 qui montre toute la chaîne cinématique logée à l'intérieur du bâti (78), les écarts réels entre certains organes ont été exagérés pour la clarté du dessin.

Pendant une opération de laminage, et en supposant que l'amenée de la pâte aux cylindres (1, 2) doive être assurée d'abord par le premier convoyeur (4), l'opérateur agit sur la manette de commande inférieure (61) qui met en rotation le couple de pignons (62, 63) pour entraîner l'arbre (64), lequel communique son mouvement au joint à cardan double (65) pour faire tourner le pignon ou secteur denté (67), qui lui-même provoque le coulissement de la crémaillère (68) dans la glissière (69). La manette (61) est tournée dans un sens tel que la crémaillère (68) est déplacée vers la gauche (par référence aux figures 2 et 6), pour agir sur le micro-contact (70) qui commande alors le contacteur-inverseur de manière à mettre en tension le moto-réducteur (12). L'arbre (18) est alors entraîné en rotation.

Par l'intermédiaire de la première vis sans fin (19), de la roue creuse (21) et de l'arbre (22), l'arbre (18) entraîne en rotation le cylindre de laminage inférieur (2). Par l'intermédiaire des pignons (25 à 28) et de l'arbre (31), l'arbre (22) communique aussi son mouvement de rotation au cylindre de laminage supérieur (1). Les deux cylindres de laminage (1, 2) tournent dans des sens opposés indiqués par les flèches respectives (80, 81) de la figure 2.

Simultanément, l'arbre (18) entraîne, par l'intermédiaire de la vis sans fin (20) et du pignon hélicoïdal (40), l'arbre d'entrée (41) du premier variateur à courroie (43). L'arbre (41) entraîne lui-même, par l'intermédiaire de la courroie crantée (50), l'arbre d'entrée (52) du second variateur à courroie (53).

La crémaillère (68) actionnée comme indiqué ci-dessus, après avoir agi sur le micro-contact (70), vient déplacer le poussoir (75) par l'intermédiaire du galet (74) qui « monte » le long de la rampe inclinée (72). Les deux flasques de la poulie réceptrice (45) du premier variateur (43) sont alors rapprochés l'un de l'autre, ce qui fait croître le diamètre d'enroulement de la courroie (44) sur cette poulie réceptrice (45). Simultanément, le diamètre d'enroulement de la courroie (44) décroît sur la poulie motrice (42) dont les flasques s'écartent en s'opposant à l'action du ressort (60). On obtient ainsi une diminution de la vitesse de l'arbre de sortie (46) du premier réducteur (43), donc une réduction de la vitesse du premier convoyeur (4), entraîné à partir de l'arbre (46) par l'intermédiaire du réducteur (47), de l'axe (48) et du rouleau moteur (6).

Plus l'opérateur agit sur la manette de commande (61), plus le galet (74) est déplacé par la crémaillère (68) de sorte que la vitesse du premier convoyeur (4) diminue progressivement jusqu'à une valeur limite fixée par la hauteur de la rampe inclinée (72). Si l'opérateur désire augmenter la vitesse du premier convoyeur (4), il agit sur la manette (61) en sens inverse de l'action précédemment exercée.

La crémaillère (68), en se déplaçant de manière à actionner le poussoir (75) du premier variateur (43), libère le poussoir (77) du second variateur (53) étant donné que le galet (76) parvient sur la partie terminale droite de la crémaillère (68). Le flasque mobile de la poulie réceptrice (56) du second variateur (53) vient alors en butée contre une entretoise (56a) dans une position d'écartement maximal de l'autre flasque. La vitesse de l'arbre de sortie (57) du second variateur (53) est alors égale à une vitesse fixe pré-réglée. Par l'intermédiaire du réducteur (58), de l'axe (59) et du rouleau moteur (10), le second convoyeur (8) se trouve entraîné dans ces conditions, à partir de l'arbre (57), à une vitesse sensiblement égale à la vitesse circonférencielle des cylindres de laminage (1, 2).

Après le passage complet du bloc de pâte entre les cylindres de laminage (1, 2), celui-ci se trouve sur le second convoyeur (8). Pour lui faire subir une nouvelle diminution d'épaisseur, on rapproche d'abord le cylindre supérieur (1) du cylindre inférieur (2), à l'aide de la manette de commande supérieure (36) qui, faisant tourner l'arbre (37) et les excentriques (38, 39) provoque l'abaissement des paliers (32, 33) dans lesquels tourne l'arbre (31) du cylindre supérieur (1). Ensuite à l'aide de la manette inférieure (61), l'opérateur déplace la crémaillère (68) dans le sens inverse de la précédente commande, de sorte que la crémaillère (68) agit sur l'autre micro-contact (71) et vient actionner le poussoir (77) du second variateur (53), tandis que le poussoir (75) du premier variateur (43) est libéré. Le sens de rotation du moto-réducteur (12), ainsi que les rôles des deux variateurs (43, 53) sont alors inversés. Les deux cylindres de laminage (1, 2) sont entraînés dans les sens indiqués par les flèches respectives (82, 83) de la figure 2. Le premier convoyeur (4) n'est plus ralenti, mais se trouve entraîné à une vitesse correspondant à celle des cylindres (1, 2). C'est le second convoyeur (8), utilisé maintenant comme convoyeur d'amenée, qui voit sa vitesse diminuée.

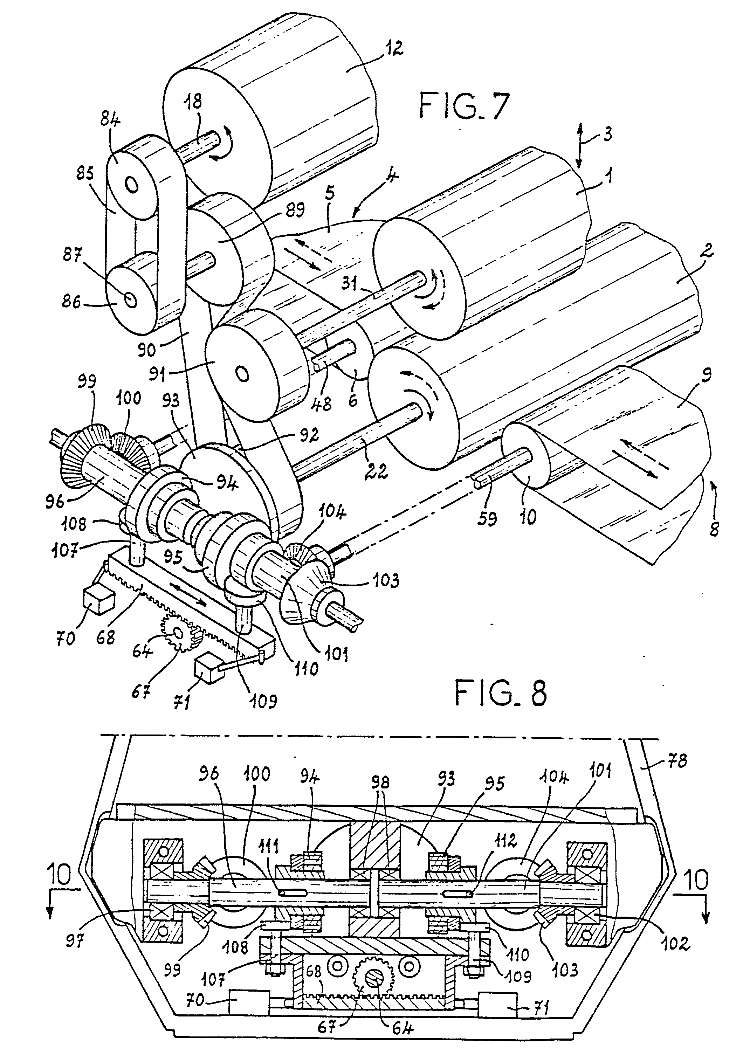

Les figures 7 à 10 sont relatives à une seconde forme d'exécution du mécanisme qui entraîne de façon réversible les cylindres de laminage (1, 2) et les deux convoyeurs (4, 8). Les organes de ce mécanisme identiques ou similaires à ceux de la première forme d'exécution sont désignés par les mêmes repères que sur les figures précédentes 1 à 6.

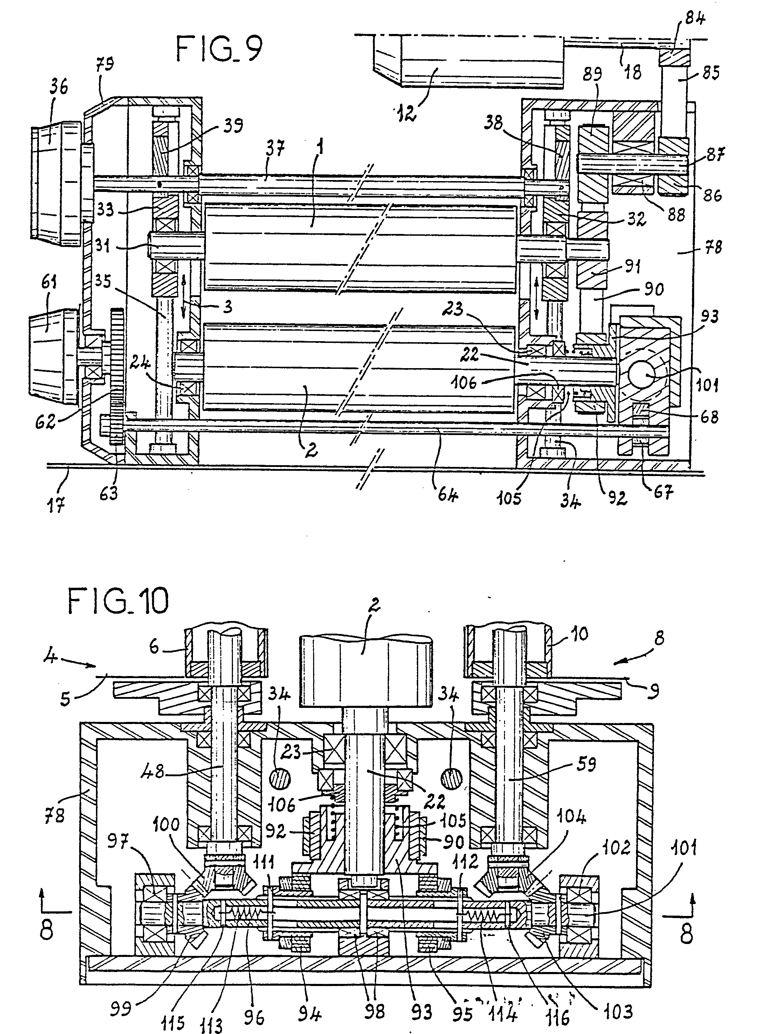

Le moto-réducteur (12) est ici situé au-dessus des deux cylindres de laminage (1, 2) — voir figures 7 et 9. Son arbre de sortie horizontal (18) porte une roue dentée motrice (84), sur laquelle passe une courroie sans fin crantée (85) entraînant une roue dentée réceptrice (86) calée sur un arbre (87) porté par un palier (88). L'arbre (87) porte une autre roue dentée (89), sur laquelle passe une courroie crantée (90) à double denture. Par sa face externe, cette courroie crantée (90) est en prise avec une roue dentée (91) calée sur l'arbre (31) du cylindre de laminage supérieur (1) qui est déplaçable verticalement suivant la flèche (3), à partir de la manette de commande (36) et par des moyens identiques à ceux décrits à propos de la première forme d'exécution. Par sa face interne, la même courroie crantée (90) est en prise avec une autre roue dentée (92) calée sur l'arbre (22) du cylindre de laminage inférieur (2). Les deux cylindres de laminage (1, 2) peuvent être ainsi entraînés en rotation dans des sens opposés.

L'arbre (22) du cylindre de laminage inférieur (2) porte, à son extrémité comportant la roue dentée (92), sur un plateau circulaire (93) assurant l'entraînement par friction de deux galets (94, 95) situés en vis-à-vis. Le premier galet (94) est monté libre en translation sur un arbre horizontal (96), de direction radiale par rapport au plateau (93) et monté tournant par ses extrémités dans un palier latéral (97) et dans un palier central (98). Le galet (94) est lié en rotation avec l'arbre (96) par des cannelures. Cet arbre (96) porte un pignon conique (99), en prise avec un autre pignon conique (100) porté par l'axe (48) du rouleau moteur (6) du premier convoyeur (4). D'une manière symétrique, le second galet (95) est monté libre en translation sur un arbre horizontal (101), situé dans le prolongement de l'arbre (96) et monté tournant par ses extrémités dans le palier central (98) et dans un palier latéral (102). Le galet (95) est lié en rotation avec l'arbre (101) par des cannelures. Cet arbre (101) porte un pignon conique (103) en prise avec un autre pignon conique (104) porté par l'axe (59) du rouleau moteur (10) du second convoyeur (8). Un ressort hélicoïdal (105), s'appuyant sur une butée à billes (106), met en pression le plateau (93) sur les galets (94, 95) qui, entraînés en rotation par friction, font avancer simultanément les deux convoyeurs (4, 8) par l'intermédiaire des chaînes cinématiques précédemment décrites.

Comme dans la première forme d'exécution, une manette de commande (61) permet d'actionner, par l'intermédiaire d'un couple de pignons (62, 63), un arbre de transmission horizontal (64) passant sous les cylindres (1, 2). Cet arbre (64) porte ici directement un pignon (67) en prise avec une crémaillère (68) montée coulissante suivant une direction horizontale. Les extrémités de la crémaillère (68) sont toujours prévues pour coopérer respectivement avec deux micro-contacts (70, 71) actionnant le contacteur-inverseur électrique qui contrôle l'alimentation du moto-réducteur (12). A son extrémité coopérant avec le micro-contact (70), la crémaillère (68) porte un petit axe vertical (107) sur lequel est monté un roulement (108) pouvant venir s'appliquer sur le premier galet (94) et le pousser en direction de centre du plateau (93). A son autre extrémité, coopérant avec le micro-contact (71), la crémaillère (68) porte encore un petit axe vertical (109) sur lequel est monté un roulement (110) pouvant venir s'appliquer sur le second galet (95) et le pousser en direction du centre du plateau (93).

Le moyeu de chaque galet (94, 95) porte une goupille (111, 112) qui traverse des lumières de l'arbre correspondant (96, 101), réalisé creux. Un ressort de rappel (113, 114) logé dans l'arbre relie la goupille (111, 112) à un point d'attache, pouvant être constitué par une autre goupille (115, 116), qui est fixe sur l'arbre (96, 101). Les ressorts (113, 114) agissent sur les galets respectifs (94, 95) dans le sens de leur éloignement du centre du plateau (93) — voir figure 10.

En agissant sur la manette de commande (61), l'opérateur déplace la crémaillère (68) par exemple dans le sens provoquant l'actionnement du micro-contact (71). Le moto-réducteur (12) est mis sous tension et les cylindres de laminage (1, 2) sont entraînés en rotation dans des sens déterminés, par l'intermédiaire des deux courroies crantées (85, 90). Simultanément, le plateau (93) fait tourner les deux galets (94, 95) qui entraînent respectivement les deux convoyeurs (4, 8), dans des sens correspondant aux sens de rotation des cylindres (1, 2). Dans l'exemple ici considéré, le convoyeur (4) devient le convoyeur amont, et le convoyeur (8) devient le convoyeur aval. Au départ, les deux galets (94, 95) occupent des positions symétriques par rapport au centre du plateau (93), de sorte que les deux convoyeurs (4, 8) sont entraînés à la même vitesse, correspondant à la vitesse circonférencielle des cylindres de laminage (1, 2).

Si l'opérateur désire diminuer la vitesse du convoyeur amont (4), il agit sur la manette (61) dans le même sens que précédemment, pour déplacer plus loin la crémaillère (68). Dans ce mouvement de la crémaillère (68), le roulement (108) est déplacé de manière à pousser le galet (94) dont le moyeu se déplacera axialement sur les cannelures de l'arbre (96), en direction du centre du plateau (93). Le galet (94) roulera sur le plateau (93) le long d'une circonférence plus petite, donc tournera plus lentement autour de son axe. Le convoyeur amont (4) entraîné à partir du galet (94) sera ainsi ralenti, sa vitesse pouvant être progressivement réduite jusqu'à une valeur correspondant à la position extrême du galet (94) la plus proche du centre du plateau (93).

Pendant que le roulement (108) est déplacé vers le centre du plateau (93) pour pousser le galet (94), l'autre roulement (110) également déplacé par le mouvement de la crémaillère (68) s'éloigne du centre du plateau (93). Le moyeu du galet correspondant (95) qui n'est plus poussé et se trouve rappelé par le ressort (114), vient dans une position extrême définie par la butée de la goupille (112) à une extrémité des lumières de l'arbre (101). Cette position est déterminée de telle manière que le galet (95) entraîne le second convoyeur (8) à une vitesse égale à la vitesse circonférencielle des cylindres de laminage (1, 2).

Lorsque les rôles des deux convoyeurs (4, 8) doivent être inversés, la crémaillère (68) est déplacée dans le sens opposé de manière à agir sur le micro-contact (70) et à pousser le galet (95) qui, rapproché du centre du plateau (93), provoquera un ralentissement du second convoyeur (8), le premier convoyeur (4) étant entraîné à la vitesse des cylindres (1, 2).

**Revendications**

1. Mécanisme d'entraînement motorisé à vitesse variable et réversible, c'est-à-dire avec inversion du sens de déplacement, des convoyeurs d'un laminoir à pâtes, du genre des laminoirs à pâte comprenant deux cylindres de laminage (1, 2) superposés d'écartement réglable, un premier convoyeur (4) à tapis sans fin (5) situé d'un côté des cylindres de laminage (1, 2), et un second convoyeur (8) à tapis sans fin (9) situé du côté opposé, et comprenant aussi ledit mécanisme d'entraînement motorisé réversible relié aux deux cylindres de laminage (1, 2) ainsi qu'aux rouleaux moteurs (6, 10) des deux convoyeurs (4, 8), ce mécanisme d'entraînement comportant un moto-réducteur (12) réversible, qui entraîne les cylindres de laminage (1, 2), et, en outre, pour obtenir une diminution de la vitesse de celui des convoyeurs utilisé comme convoyeur d'amenée de la pâte aux cylindres de laminage (1, 2), un double variateur de vitesse (43, 53) avec un arbre d'entrée (41) lui aussi entraîné à partir du moto-réducteur (12), avec un premier arbre de sortie (46) lié au rouleau moteur (6) du premier convoyeur (4), et avec un second arbre de sortie (57) lié au rouleau moteur (10) du second convoyeur (8), des moyens (68) étant prévus pour agir sur les deux variateurs de vitesse (43, 53), ces derniers étant du type à courroie (44, 55) passant sur une poulie motrice (42, 54) et sur une poulie réceptrice (45, 56) dont au moins l'une possède des flasques d'écartement variable, les poulies motrices (42, 54) des deux variateurs à courroie (43, 53) étant entraînées à la même vitesse par l'arbre d'entrée (41) entraîné lui-même à partir du moto-réducteur (12), la poulie réceptrice (45) de l'un des variateurs (43) étant montée sur le premier arbre de sortie (46) qui est lié au rouleau moteur (6) du premier convoyeur (4), et la poulie réceptrice (56) de l'autre variateur (53) étant montée sur le second arbre de sortie (57) qui est lié au rouleau moteur (10) du second convoyeur (8), caractérisé en ce qu'il est prévu, pour la commande du double variateur de vitesse à courroies (43, 53), un organe coulissant (68) unique et commun, déplaçable manuellement et comportant une première rampe inclinée (72) coopérant avec un poussoir (75) permettant de modifier l'écartement des flasques de la poulie réceptrice (45) du premier variateur à courroie (43), et une seconde rampe inclinée (73) coopérant avec un poussoir (77) permettant de modifier l'écartement des flasques de la poulie réceptrice (56) du second variateur à courroie (53), la position relative des deux rampes inclinées (72, 73) étant telle que, lorsque l'une des rampes (72 ou 73) coopère avec le poussoir correspondant (75 ou 77) de manière à rapprocher les flasques de la poulie réceptrice (45 ou 56) de l'un des variateurs à courroie (43 ou 53), le poussoir (75 ou 77) associé à la poulie réceptrice (45 ou 56) de l'autre variateur à courroie (43 ou 53) est libéré et permet aux flasques de cette dernière poulie de se placer dans une position relative prédéterminée, maintenant constante la vitesse du convoyeur (4 ou 8) entraîné par l'intermédiaire de cet autre variateur, les extrémités de l'organe de commande coulissant (68) étant prévues pour coopérer avec deux contacts électriques (70, 71) reliés à un contacteur inverseur contrôlant l'alimentation électrique et le sens de marche du moto-réducteur (12).

2. Mécanisme d'entraînement selon la revendication 1, caractérisé en ce que l'arbre d'entrée (41) du double variateur de vitesse (43, 53) constitue l'arbre d'entrée de l'un des variateurs à courroie (43) et est entraîné à partir de l'arbre de sortie (18) du moto-réducteur (12) par l'intermédiaire d'un engrenage à vis sans fin (20, 40), similaire à un premier engrenage à vis sans fin (19, 21) par l'intermédiaire duquel le même arbre (18) entraîne les cylindres de laminage (1, 2).

3. Mécanisme d'entraînement selon la revendication 2, caractérisé en ce que l'arbre d'entrée (52) de l'autre variateur à courroie (53) est entraîné à partir de l'arbre d'entrée (41) du premier variateur à courroie (43) et en synchronisme avec celui-ci, au moyen d'une courroie de transmission crantée (50).

4. Mécanisme d'entraînement selon l'une quelconque des revendications 1 à 3, caractérisé en ce qu'un dispositif réducteur de vitesse (47, 58), notamment à engrenages, est intercalé entre l'arbre de sortie (46, 57) de chaque variateur à courroie (43, 53) et l'axe (48, 59) du rouleau moteur (6, 10) du convoyeur correspondant (4, 8).

5. Mécanisme d'entraînement motorisé à vitesse variable et réversible, c'est-à-dire avec inversion du sens de déplacement, des convoyeurs d'un laminoir à pâtes, du genre des laminoirs à pâte comprenant deux cylindres de laminage (1, 2) superposés d'écartement réglable, un premier convoyeur (4) à tapis sans fin (5) situé d'un côté des cylindres de laminage (1, 2) et un second convoyeur (8) à tapis sans fin (9) situé du côté opposé, et comprenant aussi ledit mécanisme d'entraînement motorisé réversible relié aux deux cylindres de laminage (1, 2) ainsi qu'aux rouleaux moteurs (6, 10) des deux convoyeurs (4, 8), ce mécanisme d'entraînement comportant un moto-réducteur (12) réversible, qui entraîne les cylindres de laminage et en outre, pour obtenir une diminution de la vitesse de celui des convoyeurs utilisé comme convoyeur d'amenée de la pâte aux cylindres de laminage (1, 2), un double variateur de vitesse (93, 94, 95) avec un arbre d'entrée (22), lui aussi entraîné à partir du moto-réducteur (12), avec un premier arbre de sortie (96) lié au rouleau moteur (6) du premier convoyeur (4), et avec un second arbre de sortie (101) lié au rouleau moteur (10) du second convoyeur (9), des moyens (68) étant prévus pour agir sur le double variateur de vitesse (93, 94, 95), caractérisé en ce que le double variateur de vitesse comprend un plateau tournant (93), porté par l'arbre d'entrée (22) entraîné à partir du moto-réducteur (12), un premier galet (94) apte à être entraîné par effet de friction par le plateau (93) et porté par un arbre (96), de direction radiale par rapport au plateau (93), qui est relié au rouleau moteur (6) du premier convoyeur (4), et un second galet (95) apte à être entraîné lui aussi par friction par le même plateau (93) et porté par un arbre (101), de direction radiale par rapport au plateau (93), qui est relié au rouleau moteur (10) du second convoyeur (8), chaque galet (94, 95) étant déplaçable axialement sur l'arbre correspondant (96, 101) réalisé creux et présentant des lumières traversées par une goupille (111, 112) portée par le moyeu du galet (94, 95), un ressort de rappel (113, 114) logé dans l'arbre (96, 101) reliant la goupille (111, 112) à un point d'attache (115, 116) fixe sur l'arbre (96, 101), et en ce qu'il est prévu, pour la commande de ce double variateur de vitesse (93, 94, 95), un organe coulissant (68) unique et commun, déplaçable manuellement et portant deux poussoirs (107, 109), de préférence équipés de roulements (108, 110), dont chacun est apte à s'appliquer sur l'un des galets (94, 95) pour le déplacer en direction du centre du plateau (93), les extrémités de l'organe de commande coulissant (68) étant prévues pour coopérer avec deux contacts électriques (70, 71) reliés à un contacteur inverseur contrôlant l'alimentation électrique et le sens de marche du moto-réducteur (12).

6. Mécanisme d'entraînement selon la revendication 5, caractérisé en ce que le plateau tournant (93) est porté par une extrémité de l'arbre (22) de l'un des cylindres de laminage (1, 2), tel que le cylindre de laminage inférieur (2).

7. Mécanisme d'entraînement selon la revendication 6, caractérisé en ce que chacun des arbres (96, 101) portant l'un des galets (94, 95) est relié à l'axe (48, 59) du rouleau moteur (6, 10) du convoyeur correspondant (4, 8) auquel il transmet son mouvement de rotation, par l'intermédiaire d'un couple de pignons coniques (99, 100 ; 103, 104).

8. Mécanisme d'entraînement selon l'une quelconque des revendications 1 à 7, caractérisé en ce que l'organe de commande coulissant du double variateur de vitesse (43, 53 ; 93, 94, 95) est réalisé sous la forme d'une crémaillère (68) en prise avec un pignon ou un secteur denté (67) monté sur un arbre (64 ; 66) actionné à partir d'un moyen de commande manuelle (61).

**Claims**

1. Motorised drive mechanism having a variable speed and which is reversible, i.e. with reversal of the direction of movement, for the conveyors of a rolling mill for dough, of the type comprising two super-imposed rolls (1, 2) of adjustable spacing, a first conveyor (4) comprising an endless belt (5) situated on one side of the rolls (1, 2) and a second conveyor (8) comprising an endless belt (9) situated on the opposite side and also comprising said reversible motorised drive mechanism connected to the two rolls (1, 2) as well as to the drive rollers (6, 10) of the two conveyors (4, 8), this drive mechanism comprising a reversible speed-reduction unit (12), which drives the rolls (1, 2) and also, in order to obtain a reduction in the speed of whichever of the conveyors is used as a conveyor for supplying dough to the rolls (1, 2), double speed variation means (43, 53) with an input shaft (41) itself also driven by the speed-reduction unit (12) with a first output shaft (46) connected to the drive roller (6) of the first conveyor (4) and with a second output shaft (57) connected to the drive roller (10) of the second conveyor (8), means (68) being provided for acting on the two speed variation means (43, 53), the latter being of the type comprising a belt (44, 55) passing over a drive pulley (42, 54) and over a receiving pulley (45, 56) whereof at least one comprises cheeks of variable spacing, the drive pulleys (42, 54) of the two variation means comprising a belt (43, 53) being driven at the same speed by the input shaft (41) in turn driven by the speed-reduction unit (12), the receiving pulley (45) of one of the variation means (43) being mounted on the first output shaft (46) which is connected to the drive roller (6) of the first conveyor (4) and the receiving pulley (56) of the other variation means (53) being mounted on the second output shaft (57) which is connected to the drive roller (10) for the second conveyor (8), characterised in that provided for the control of the double speed variation means comprising belts (43, 53) is a single and common sliding member (68), which can be moved manually and comprises a first inclined ramp (72) cooperating with a push-rod (75) making it possible to modify the spacing of the cheeks of the receiving pulley (45) of the first variation means comprising a belt (43) and a second inclined ramp (73) cooperating with a push rod (77) making it possible to modify the spacing of the cheeks of the receiving pulley (56) of the second variation means comprising a belt (53), the relative position of the two inclined ramps (72, 73) being such that when one of the ramps (72 or 73) cooperates with the corresponding push rod (75 or 77) in order to bring nearer together the cheeks of the receiving pulley (45 or 56) of one of the variation means comprising a belt (43 or 53), the push rod (75 or 77) associated with the receiving pulley (45 or 56) of the other variation means comprising a belt (43 or 53) is released and allows the cheeks of this latter pulley to move into a predetermined relative position, keeping the speed of the conveyor (4 or 8) driven by the intermediary of this other variation means constant, the ends of the sliding control member (68) being provided in order to cooperate with two electrical contacts (70, 71) connected to a reversing contact-maker controlling the electrical supply and the direction of operation of the speed-reducer unit (12).

2. Drive mechanism according to Claim 1, characterised in that the input shaft (41) of the double speed variation means (43, 53) constitutes the input shaft of one of the speed variation means comprising a belt (43) and is driven by the output shaft (18) of the speed reduction unit (12) through the intermediary of worm gearing (20, 40), similar to first worm gearing (19, 21) through the intermediary of which the same shaft (18) drives the rolls (1, 2).

3. Drive mechanism according to Claim 2, characterised in that the input shaft (52) of the other variation means comprising a belt (53) is driven by the input shaft (41) of the first variation means comprising a belt (43) and in synchronism with the latter, by means of a notched transmission belt (50).

4. Drive mechanism according to one of Claims 1 to 3, characterised in that a speed reducer device (47, 58) in particular comprising gearing is interposed between the output shaft (46, 57) of each variation means comprising a belt (43, 53) and the shaft (48, 59) of the drive roller (6, 10) of the corresponding conveyor (4, 8).

5. Motorised drive mechanism having a variable speed and which is reversible, i.e. with reversal of the direction of movement, for the conveyors of a rolling mill for dough of the type of rolling mills for dough comprising two superimposed rolls (1, 2) of adjustable spacing, a first conveyor (4) comprising an endless belt (5) situated on one side of the rolls (1, 2) and a second conveyor (8) comprising an endless belt (9) situated on the opposite side and also comprising the said reversible motorised drive mechanism connected to the two rolls (1, 2) as well as to the drive rollers (6, 10) of the two conveyors (4, 8), this drive mechanism comprising a reversible speed-reducer unit (12), which drives the rolls and also in order to obtain a reduction in the speed of whichever of the conveyors is used as a conveyor for supplying the dough to the rolls (1, 2), double speed variation means (93, 94, 95) with an input shaft (22), in turn also driven by the speed-reducer unit (12), with a first output shaft (96) connected to the drive roller (6) of the first conveyor (4) and with a second output shaft (101) connected to the drive roller (10) of the second conveyor (9), means (68) being provided for acting on the double speed variation means (93, 94, 95), characterised in that the double speed variation means comprise a rotating plate (93), supported by the input shaft (22) driven by the speed-reducer unit (12), a first roller (94) able to be driven by the effect of friction by the plate (93) and supported by a shaft (96) of radial direction with respect to the plate (93), which is connected to the drive roller (6) of the first conveyor (4) and a second roller (95) able to be driven in turn also by friction by the same plate (93) and supported by a shaft (101) of radial direction with respect to the plate (93), which is connected to the drive roller (10) of the second conveyor (8), each roller (94, 95) being able to move axially on the corresponding shaft (96, 101) which is hollow and comprises apertures through which passes a cotter pin (111, 112) supported by the hub of the roller (94, 95), a return spring (113, 114) housed in the shaft (96, 101) connecting the cotter pin (111, 112) to a fixed attachment point (115, 116) on the shaft (96, 101) and in that a single and common sliding member (68) is provided for controlling these double speed variation means (93, 94, 95), which member (68) is able to move manually and support two push rods (107, 109) preferably equipped with bearings (108, 110) whereof each is able to press against one of the rollers (94, 95) in order to move it in the direction of the centre of the plate (93), the ends of the sliding control member (68) being provided in order to cooperate with two electrical contacts (70, 71) connected to a reversing contact-maker controlling the electrical supply and the direction of operation of the speed-reducer unit (12).

6. Drive mechanism according to Claim 5, characterised in that the rotating plate (93) is supported by one end of the shaft (22) of one of the rolls (1, 2) such as the lower roll (2).

7. Drive mechanism according to Claim 6, characterised in that each of the shafts (96, 101) supporting one of the rollers (94, 95) is connected to the shaft (48, 59) of the drive roller (6, 10) of the corresponding conveyor (4, 8) to which it transmits its rotary movement through the intermediary of a pair of bevel gears (99, 100 ; 103, 104).

8. Drive mechanism according to one of Claims 1 to 7, characterised in that the sliding control member of the double speed variation means (43, 53 ; 93, 94, 95) is constructed in the form of a rack (68) meshing with a pinion or toothed sector (67) mounted on a shaft (64, 66) actuated by manual control means (61).

## Patentansprüche

1. Motorgetriebener Antriebsmechanismus für eine veränderliche Drehzahl und Drehrichtungsumkehr — d. h. für die Umkehr der Bewegungsrichtung — der Förderer einer Teigausrollmaschine, die zwei übereinander angeordnete Ausrollwalzen (1, 2) mit veränderlichem Abstand, einen ersten Förderer (4) mit einem endlosen Band (5), welcher an einer Seite der Ausrollwalzen (1, 2) angeordnet ist, und einen zweiten Förderer (8) mit einem endlosen Band (9), welcher an der anderen Seite angeordnet ist, umfaßt und ferner den genannten motorgetriebenen, drehrichtungsumkehrbaren Antriebsmechanismus, welcher mit den beiden Ausrollwalzen (1, 2) sowie mit den Antriebsrollen (6, 10) der beiden Förderer (4, 8) verbunden ist, wobei der Antriebsmechanismus einen drehrichtungsumkehrbaren Getriebemotor (12) umfaßt, welcher die Ausrollwalzen (1, 2) und zudem zur Erzielung einer Geschwindigkeitsverringerung des zum Zuführen des Teiges zu den Ausrollwalzen (1, 2) dienenden Förderers einen doppelten Drehzahlvariator (43, 53) antreibt, welcher eine ebenfalls vom Getriebemotor (12) angetriebene Eingangswelle (41) aufweist sowie eine erste, mit der Antriebsrolle (6) des erstens Förderers (4) verbundene Ausgangswelle (46) und eine zweite, mit der Antriebsrolle (10) des zweiten Förderers (8) verbundene Ausgangswelle (57), wobei ferner Mittel (68) vorgesehen sind, um auf die beiden Drehzahlvariatoren (43, 53) einzuwirken, welche von der Art sind, bei welcher ein Riemen (44, 55) über eine Antriebsscheibe (42, 54) und über eine Abtriebsscheibe (45, 56) läuft, von denen wenigstens eine zwei abstandsveränderliche Flansche aufweist, wobei die Antriebsscheiben (42, 54) der beiden Riemenvariatoren (43, 53) mit der gleichen Drehzahl über die Eingangswelle (41) angetrieben werden, die ihrerseits vom Getriebemotor (12) angetrieben wird, und wobei die Abtriebsscheibe (45) eines Variators (43) auf der ersten, mit der Antriebsrolle (6) des ersten Förderers (4) verbundenen Ausgangswelle (46) angeordnet und die Abtriebsscheibe (56) des anderen Variators (53) auf der zweiten, mit der Antriebsrolle (10) des zweiten Förderers (8) verbundenen Ausgangswelle (57) angeordnet ist, dadurch gekennzeichnet, daß zum Ansteuern des doppelten Riemen-Drehzahlvariators (43, 53) ein einzelnes, beiden gemeinsames und gleitend gelagertes Betätigungsorgan (68) vorgesehen ist, welches manuell verschiebbar ist und eine erste geneigte, mit einem Stößel (75) zum Verändern des Flanschabstandes der Antriebsscheibe (45) des ersten Riemenvariators (43) zusammenwirkende Rampe (72) und eine zweite geneigte, mit einem Stößel (77) zum Verändern des Flanschabstandes der Abtriebsscheibe (56) des zweiten Riemenvariators (53) zusammenwirkende Rampe (73) aufweist, wobei die gegenseitige Lage der beiden geneigten Rampen (72, 73) so ist, daß dann, wenn eine der Rampen (72 oder 73) mit dem zugeordneten Stößel (75 oder 77) zusammenwirkt, um die Flansche der Abtriebsscheibe (45 oder 56) eines Riemenvariators (43 oder 53) einander zu nähern, der der Abtriebsscheibe (45 oder 56) des anderen Riemenvariators (43 oder 53) zugeordnete Stößel (75 oder 77) freigegeben wird und den Flanschen dieser letzteren Abtriebsscheibe erlaubt, sich in eine gegenseitige, vorbestimmte Stellung einzustellen, bei welcher die Geschwindigkeit des durch diesen anderen Variator angetriebenen Förderers (4 oder 8) konstant gehalten wird, und wobei die Enden des gleitend gelagerten Betätigungsorgans (68) mit zwei elektrischen Kontakten (70, 71) zusammenwirken können, die mit einem die elektrische Stromversorgung und die Drehrichtung des Getriebemotors (12) steuernden Umschalter verbunden sind.

2. Antriebsmechanismus nach Anspruch 1, dadurch gekennzeichnet, daß die Eingangswelle (41) des doppelten Drehzahvariators (43, 53) die Eingangswelle eines der Riemenvariatoren (43) bildet und von der Ausgangswelle (18) des Getriebemotors (12) über eine Schneckenverzahnung (20, 40) angetrieben wird, die einer ersten Schneckenverzahnung (19, 21) gleich ist, über welche die gleiche Ausgangswelle (18) die Ausrollwalzen (1, 2) antreibt.

3. Antriebsmechanismus nach Anspruch 2, dadurch gekennzeichnet, daß die Eingangswelle (52) des anderen Riemenvariators (53) von der Eingangswelle (41) des ersten Riemenvariators (43) und zu dieser synchron über einen Zahnriemen (50) angetrieben wird.

4. Antriebsmechanismus nach einem der Ansprüche 1 bis 3, dadurch gekennzeichnet, daß ein Drehzahlreduziergetriebe (47, 58), insbesondere Zahnradgetriebe zwischen der Ausgangswelle (46, 57) jedes der Riemenvariatoren (43, 53) und der Achse (48, 59) der Antriebsrolle (6, 10) des zugeordneten Förderers (4, 8) zwischengeschaltet ist.

5. Motorgetriebener Antriebsmechanismus für eine veränderliche Drehzahl und Drehrichtungsumkehr — d. h. für die Umkehr der Bewegungsrichtung — der Förderer einer Teigausrollmaschine, die zwei übereinander angeordnete Ausrollwalzen (1, 2) mit veränderlichem Abstand, einen ersten Förderer (4) mit einem endlosen Band (5), der an einer Seite der Ausrollwalzen (1, 2) angeordnet ist, und einen zweiten Förderer (8) mit einem endlosen Band (9), der an der anderen Seite angeordnet ist, umfaßt und ferner den genannten motorgetriebenen, drehrichtungsumkehrbaren Antriebsmechanismus, welcher mit den beiden Ausrollwalzen (1, 2) sowie mit den Antriebsrollen (6, 10) der beiden Förderer (4, 8) verbunden ist, wobei der Antriebsmechanismus einen drehrichtungsumkehrbaren Getriebemotor (12) umfaßt, welcher die Ausrollwalzen (1, 2) und außerdem zur Erzielung einer Geschwindigkeitsverringerung des zum Zuführen des Teiges zu den Ausrollwalzen (1, 2) dienenden Förderers einen doppelten Drehzahlvariator (93, 94, 95) mit einer ebenfalls vom Getriebemotor (12) angetriebenen Eingangswelle (22) antreibt, wobei der Drehzahlvariator (93, 94, 95) eine erste, mit der Antriebsrolle (6) des ersten Förderers (4) verbundene Ausgangswelle (96) und eine zweite, mit der Antriebsrolle (10) des zweiten Förderers (9) verbundene Ausgangswelle (101) aufweist, wobei ferner Mittel (68) vorgesehen sind, um auf den doppelten Drehzahlvariator (93, 94, 95) einzuwirken, dadurch gekennzeichnet, daß der doppelte Drehzahlvariator eine umlaufende Scheibe (93) umfaßt, welche an der durch den Getriebemotor (12) angetriebenen Eingangswelle (22) angeordnet ist, ferner eine erste Rolle (94), welche mittels Reibung durch die Scheibe (93) antreibbar und auf einer bezüglich der Scheibe (93) radial gerichteten Welle (96) angeordnet ist, die mit der Antriebsrolle (6) des ersten Förderers (4) verbunden ist, ferner eine zweite Rolle (95), welche ebenfalls mittels Reibung durch die gleiche Scheibe (93) antreibbar und auf einer bezüglich der Scheibe (93) radial gerichteten Welle (101) angeordnet ist, die mit der Antriebsrolle (10) des zweiten Förderers (8) verbunden ist, wobei jede dieser Rollen (94, 95) axial auf der zugeordneten Welle (96, 101) verschiebbar ist, die jeweils hohl ausgebildet und mit einer Durchbrechung versehen sind, welche von einem von der Nabe der Rollen (94, 95) gehaltenen Stift (111, 112) durchsetzt sind, und wobei jeweils eine Rückstellfeder (113, 114) in der Welle (96, 101) angeordnet ist, welche den Stift (111, 112) gegen einen an der Welle (96, 101) fest angeordneten Anschlag (115, 116) drückt, und daß zur Steuerung dieses doppelten Drehzahlvariators (93, 94, 95) ein einzelnes, beiden gemeinsames und gleitend gelagertes Betätigungsorgan (68) vorgesehen ist, welches manuell verschiebbar ist und vorzugsweise mit Rollen (108, 110) versehene Stößel (107, 109) aufweist, deren jeder sich gegen eine der Rollen (94, 95) anlegen kann, um diese zur Mitte der Scheibe (93) hin zu verschieben, wobei die Enden des gleitend gelagerten Betätigungsorgans (68) dazu bestimmt sind, mit zwei elektrischen Kontakten (70, 71) zusammenzuwirken, welche mit einem die elektrische Stromversorgung und die Drehrichtung des Getriebemotors (12) steuernden Umschalter verbunden sind.

6. Antriebsmechanismus nach Anspruch 5, dadurch gekennzeichnet, daß die umlaufende Scheibe (93) am Ende der Welle (22) einer der Ausrollwalzen (1, 2) angeordnet ist, beispielsweise der unteren Ausrollwalze (2).

7. Antriebsmechanismus nach Anspruch 6, dadurch gekennzeichnet, daß jede der eine Rolle (94, 95) tragenden Wellen (96, 101) mit der Achse (48, 59) der Antriebsrolle (6, 10) des zugeordneten Förderers (4, 8), auf den sie ihre Drehbewegungen überträgt, über eine Kegelradpaarung (99, 100 ; 103, 104) verbunden ist.

8. Antriebsmechanismus nach einem der Ansprüche 1 bis 7, dadurch gekennzeichnet, daß das gleitend gelagerte Betätigungsorgan für den doppelten Drehzahlvariator (43, 53 ; 93, 94, 95) als Zahnstange (68) ausgebildet ist, die mit einem Zahnrad oder einem Zahnradsegment (67) in Eingriff steht, welches auf einer über eine manuelle Betätigungseinrichtung (61) betätigbaren Welle (64, 66) angeordnet ist.

FIG.1

FIG.3

FIG. 2

FIG_4

FIG_5

FIG_6

0 084 509

FIG. 7

FIG. 8

FIG.9

FIG.10